# EUROPÄISCHE PATENTANMELDUNG

(11) **EP 1 422 881 A1**
(43) Veröffentlichungstag der Anmeldung: **26.05.2004**
(21) Anmeldenummer: 02026189.7
(22) Anmeldetag: 25.11.2002
(51) Int. Cl.: H04L 12/56, H04Q 7/38

(54) **Verfahren zum Übertragen von Daten mehrerer Verbindungen mit sich jeweils während der bestehenden Verbindung ändernden Übertragungsraten sowie entsprechende Station**

(71) Anmelder: SIEMENS AKTIENGESELLSCHAFT, 80333 München (DE)
(72) Erfinder: Oestreich, Stefan, 83607 Holzkirchen (DE); Purat, Marcus, Dr., 12209 Berlin (DE); Schniedenharn, Jörg, 13587 Berlin (DE)

(57) **Zusammenfassung**

Zum Erreichen des ersten Wertes der Übertragungsrate werden die Daten (D1, D2) der entsprechenden Verbindung (V1, V2) vor ihrer Übertragung mit einem für die Verbindung individuellen Spreizcode (SC1, SC2) gespreizt und mit dem ersten Verwürfelungscode (VC1) verwürfelt und anschließend übertragen. Zum Erreichen des zweiten Wertes der Übertragungsrate werden die Daten (D1) der entsprechenden Verbindung (V1) vor ihrer Übertragung in zwei Gruppen (G11, G12) aufgeteilt, woraufhin die Daten der ersten Gruppe (G11) mit einem der Spreizcodes (SC1) gespreizt und mit dem ersten Verwürfelungscode (VC1) verwürfelt werden, die Daten der zweiten Gruppe (G12) mit einem der Spreizcodes (SC1; SC3) gespreizt und mit dem zweiten Verwürfelungscode (VC2) verwürfelt werden und die Daten anschließend übertragen werden, wobei für jede der beiden Gruppen jeder Verbindung ein im Vergleich zu der entsprechenden Gruppe der anderen Verbindungen individueller Spreizcode verwendet wird.

## Beschreibung

Die Erfindung betrifft ein Verfahren zum Übertragen von Daten mehrerer Verbindungen mit sich jeweils während der bestehenden Verbindung ändernden Übertragungsraten sowie eine entsprechende Station.

In zukünftigen Mobilfunksystemen wird Sprache nicht mehr nur verbindungsorientiert (circuit switched), sondern auch paketorientiert (packet switched) übertragen. Hierbei soll jedoch die Übertragungsqualität (Quality of Service), die durch Bitfehlerrate, Verzögerung etc. bestimmt ist, in gleicher Weise erhalten bleiben. Bei UMTS-FDD (Universal Mobile Telecommunications System - Frequency Division Duplex) erfolgt eine Übertragung der Daten über die Luftschnittstelle, nachdem sie zuvor mit einem Spreizcode (spreading code) gespreizt und mit einem Verwürfelungscode (scrambling code) verwürfelt worden sind. Die zur Verfügung stehenden Spreizcodes sind zueinander orthogonal, das heißt ihre Kreuzkorrelation beträgt Null. Die Verwürfelungscodes weisen dagegen Kreuzkorrelationswerte größer als Null auf, da sie im Hinblick auf ihre Verwendung als PN-(Pseudo Noise) Sequenz (Zufallsfolge) nicht auf ihre Kreuzkorrelation zueinander, sondern auf ihre Autokorrelation optimiert sind.

Bei Verwendung der sogenannten ROHC (Robust Header Compression) schwankt die Länge der Datenpakete während einer Verbindung, da die Länge des Headers unterschiedlich sein kann. Es ist notwendig, jeder Verbindung Übertragungsressourcen in Form von Spreizcodes und Verwürfelungscodes zuzuteilen, die ausreichen, auch die langen Datenpakete übertragen zu können.

Der Erfindung liegt die Aufgabe zugrunde, ein Verfahren zur Datenübertragung der genannten Art anzugeben, bei dem Störungen zwischen mehreren Verbindungen möglichst gering gehalten werden.

Diese Aufgabe wird mit einem Verfahren sowie einer Station gemäß den unabhängigen Ansprüchen gelöst. Vorteilhafte Aus- und Weiterbildungen der Erfindung sind Gegenstand der abhängigen Ansprüche.

Das erfindungsgemäße Verfahren zum Übertragen von Daten mehrerer Verbindungen mit sich jeweils während der bestehenden Verbindung ändernden Übertragungsraten in einem Kommunikationssystem, in dem
- die Übertragungsrate jeder Verbindung wenigstens einen ersten Wert und einen im Vergleich zum ersten Wert höheren zweiten Wert annehmen kann,
- für jede Verbindung der erste Wert der Übertragungsrate häufiger auftritt als der zweite Wert der Übertragungsrate,
- und zueinander orthogonale Spreizcodes zum Spreizen der zu übertragenden Daten und wenigstens zwei Verwürfelungscodes zum Verwürfeln der gespreizten Daten zur Verfügung stehen,
sieht folgende Schritte vor:
- zum Erreichen des ersten Wertes der Übertragungsrate werden die Daten der entsprechenden Verbindung vor ihrer Übertragung mit einem für die Verbindung individuellen Spreizcode gespreizt und mit dem ersten Verwürfelungscode verwürfelt und anschließend übertragen,
- und zum Erreichen des zweiten Wertes der Übertragungsrate werden die Daten der entsprechenden Verbindung vor ihrer Übertragung in zwei Gruppen aufgeteilt, woraufhin die Daten der ersten Gruppe mit einem der Spreizcodes gespreizt und mit dem ersten Verwürfelungscode verwürfelt werden, die Daten der zweiten Gruppe mit einem der Spreizcodes gespreizt und mit dem zweiten Verwürfelungscode verwürfelt werden und die Daten anschließend übertragen werden, wobei für jede der beiden Gruppen jeder Verbindung ein im Vergleich zu der entsprechenden Gruppe der anderen Verbindungen individueller Spreizcode verwendet wird.

Durch die Erfindung wird erreicht, dass nur in dem (relativ) seltenen Fall der hohen Übertragungsrate der zweite Verwürfelungscode für die jeweilige Verbindung verwendet wird. Während der übrigen Zeit wird ausschließlich der erste Verwürfelungscode verwendet. Dies hat den Vorteil, dass die Verbindungen sich relativ wenig stören. Da die Spreizcodes orthogonal zueinander sind, ergibt die Verwendung desselben Verwürfelungscodes (aber unterschiedlicher Spreizcodes) für mehrere Verbindungen nämlich keine Aufhebung dieser Orthogonalität. Das bedeutet, dass die Verbindungen empfängerseitig leicht zu trennen sind. Werden dagegen Daten unter Verwendung unterschiedlicher Verwürfelungscodes übertragen, wird die Orthogonalität der verwendeten Spreizcodes aufgehoben, es kommt zu Störungen zwischen den Verbindungen. Diese Störungen werden durch die Erfindung verringert, weil für jede der beiden Verbindungen der höhere Wert der Datenrate seltener auftritt als der niedrige Wert. Nur in diesem seltenen Fall sieht die Erfindung die Verwendung des zweiten Verwürfelungscodes vor.

Die Erfindung ist in beliebigen Kommunikationssystemen, insbesondere Funkkommunikationssystemen anwendbar.

Das Kommunikationssystem kann ein Mobilfunksystem mit Funkzellen sein und die Daten der Verbindungen können von einer Basisstation des Mobilfunksystems in Abwärtsrichtung zu unterschiedlichen Teilnehmerstationen übertragen werden. Die Spreizcodes können zur Unterscheidung von einzelnen Verbindungen innerhalb wenigstens einer der Funkzellen dienen und die Verwürfelungscodes zur Unterscheidung von Verbindungen innerhalb einer der Funkzellen von Verbindungen innerhalb anderer der Funkzellen. Somit ist die Erfindung insbesondere zur Anwendung in einem Mobilfunksystem nach dem UMTS-FDD-Standard geeignet.

Nach einer Weiterbildung der Erfindung bilden die zu übertragenden Daten für jede Verbindung Datenpakete, die einen Header und einen Datenanteil aufweisen.

Eine Weiterbildung der Erfindung sieht vor, dass für jede Verbindung der erste Wert der Übertragungsrate vorliegt, wenn der Header des aktuell zu übertragenden Datenpakets eine erste Länge aufweist, und der zweite Wert der Übertragungsrate vorliegt, wenn der Header des aktuell zu übertragenden Datenpakets eine zweite Länge aufweist, die länger als die erste Länge ist. Die Erfindung eignet sich somit insbesondere für die Anwendung im Zusammenhang mit der eingangs erwähnten ROHC-Methode.

Die Verbindungen können Sprachverbindungen sein und der Datenanteil der Datenpakete kann durch codierte Sprache gebildet werden.

Es ist vorteilhaft, wenn bei Aufbau jeder Verbindung für diese zum Erzielen sowohl des ersten als auch des zweiten Wertes der Übertragungsrate Übertragungsressourcen reserviert werden, wobei die Übertragungsressourcen durch den ersten Verwürfelungscode und den zweiten Verwürfelungscode jeweils in Verbindung mit den entsprechenden Spreizcodes gebildet werden. Dies entspricht einer Allokierung der Übertragungsressourcen für die jeweilige Verbindung und stellt sicher, dass für jede Datenrate ausreichend Übertragungskapazität vorgehalten wird.

Die erfindungsgemäße Station zum Übertragen der Daten der Verbindungen weist die Mittel bzw. Komponenten auf, die zur Durchführung des erfindungsgemäßen Verfahrens sowie seiner Aus- und Weiterbildungen notwendig sind. Die Station kann vorzugsweise eine Basisstation in einem Mobilfunksystem sein.

Im Folgenden wird die Erfindung anhand von in den Figuren dargestellten Ausführungsbeispielen näher erläutert. Es zeigen:
- Figur 1: Einen Ausschnitt eines Kommunikationssystems mit einer Basisstation und zwei Teilnehmerstationen,
- Figur 2: Funkzellen des Kommunikationssystems aus Figur 1,
- Figur 3A: das Spreizen und Verwürfeln von Daten von Verbindungen aus Figur 1 unter Nutzung eines ersten Verwürfelungscodes,
- Figur 3B: das Spreizen und Verwürfeln von Daten von Verbindungen aus Figur 1 unter Nutzung eines zweiten Verwürfelungscodes,
- Figur 4A: ein kurzes Datenpaket, das über eine Verbindung aus Figur 1 zu übertragen ist,
- Figur 4B: ein langes Datenpaket, das über eine Verbindung aus Figur 1 zu übertragen ist,
- Figur 4C: die Aufteilung des Datenpakets aus Figur 4B in zwei Gruppen von Daten und
- Figur 5: den Aufbau der Basisstation aus Figur 1.

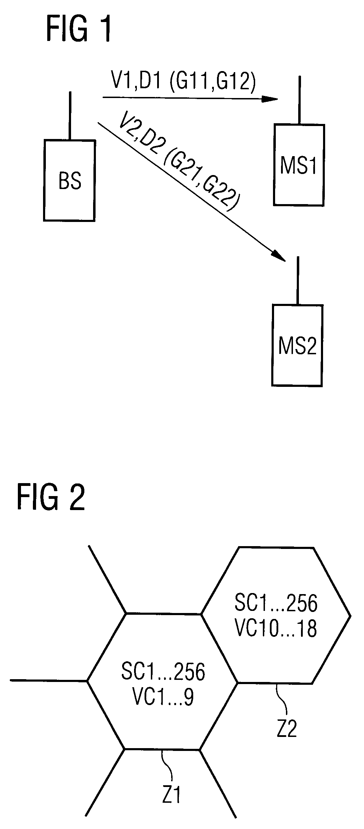

Figur 1 zeigt einen Ausschnitt eines erfindungsgemäßen Kommunikationssystems mit einer Basisstation BS und zwei Teilnehmerstationen MS1, MS2. Die Teilnehmerstationen sind mobile Stationen, für die Erfindung ist dies jedoch unwesentlich. Sie können daher auch stationär sein. Das Kommunikationssystem ist ein zellulares Mobilfunksystem, das nach dem UMTS-FDD- (Universal Mobile Telecommunications System - Frequency Division Duplex-) Standard arbeitet.

Figur 2 zeigt ausschnittsweise die zellulare Struktur des Kommunikationssystems. Das System wird durch einander benachbarte Funkzellen gebildet, von denen Figur 2 lediglich zwei Funkzellen Z1, Z2 zeigt und weitere nur andeutet. In jeder Funkzelle stehen dieselben 256 zueinander orthogonalen Spreizcodes SC1..256 (Spreading Codes) zum Spreizen der zu übertragenden Daten zur Verfügung. Außerdem sind jeder Funkzelle Z1, Z2 neun Verwürfelungscodes VC1..9, VC10..18 (Scrambling Codes) zugeteilt, die sich von Funkzelle zu Funkzelle unterscheiden und die zum Verwürfeln der gespreizten Daten vor ihrer Übertragung über die Luftschnittstelle dienen. Das Spreizen dient einer Verbreiterung des für die Übertragung erforderlichen Funkspektrums. Jeder Spreizcode besteht aus einer Chipfolge, mit der die zu übertragenden Daten gespreizt werden. Der Verwürfelungscode dient anschließend dazu, die Chipfolgen unterschiedlicher Verbindungen (insbesondere aus unterschiedlichen Zellen) statistisch unabhängig voneinander zu machen.

Die in Figur 1 gezeigten Stationen BS, MS1, MS2 befinden sich innerhalb der Funkzelle Z1 aus Figur 2. Zwischen der Basisstation BS und den Teilnehmerstationen MS1, MS2 besteht jeweils eine Verbindung V1, V2, über die in Abwärtsrichtung (Downlink) Daten D1, D2 übertragen werden: Bei den Verbindungen V1, V2 handelt es sich um Sprachverbindungen. Von Zeit zu Zeit werden die Daten D1, D2 jeder Verbindung V1, V2 in zwei Gruppen G11, G12; G21, G22 unterteilt, wie nachfolgend noch erklärt wird.

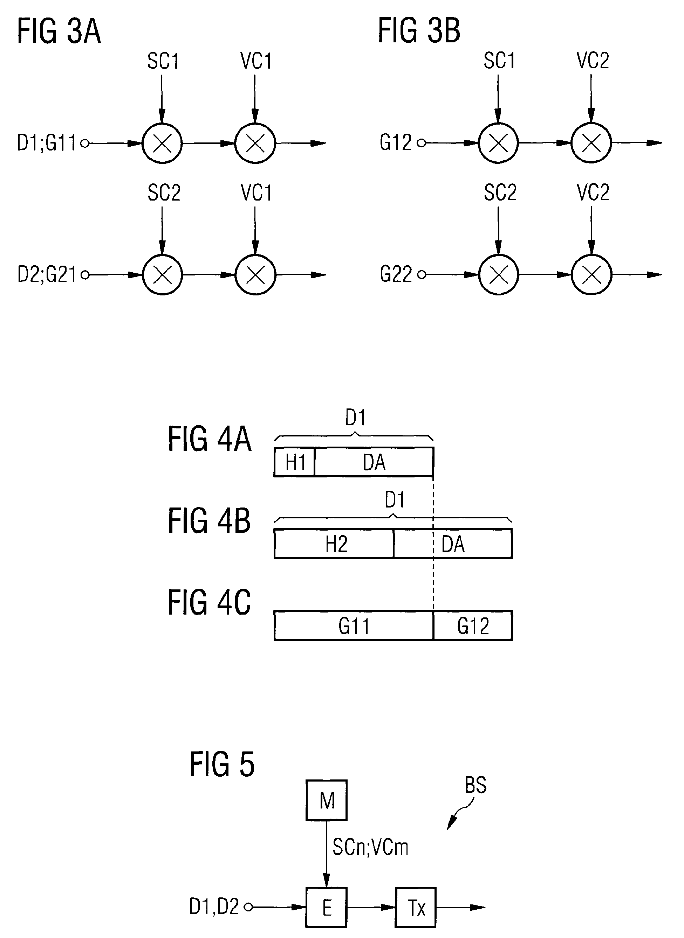

Bei den Verbindungen V1, V2 handelt es sich um Sprachverbindungen. Gemäß den Figuren 4A und 4B werden die Daten D1 (für die Daten D2 der zweiten Verbindung gilt dies ebenfalls) in Form von Datenpaketen übertragen, die jeweils einen Header (Kopfteil) H1, H2 und einen Datenteil DA aufweisen. Bei den Datenanteilen DA handelt es sich um codierte Sprachdaten der jeweiligen Verbindung V1. Es kann entweder ein kurzer Header H1 gemäß Figur 4A oder ein langer Header H2 gemäß Figur 4B mit dem Datenanteil DA übertragen werden. Entsprechend schwankt die für die Übertragung notwendige Datenrate während der bestehenden Verbindung V1, wobei allerdings die Länge des Datenanteils DA konstant ist (bei anderen Ausführungsbeispielen kann auch diese schwanken und damit zur Schwankung der Datenrate der Verbindung beitragen). Wird der kurze Header H1 mit dem jeweiligen Datenpaket übertragen, ist die Datenrate niedriger, als wenn der lange Header H2 übertragen wird. Die unterschiedliche Länge der Header H1, H2 entsteht dadurch, dass mit der sogenannten Robust Header Compression (ROHC) gearbeitet wird. Dies bedeutet, dass der lange Header H2, der alle für die Verbindung wesentlichen Angaben über die jeweils zugehörigen Datenanteile DA enthält, nur selten übertragen wird, beispielsweise bei Aufbau der Verbindung oder bei während der Verbindung auftretenden Störungen. Die übrige Zeit wird der kurze Header H1 verwendet, der wesentlich weniger Daten enthält als der lange Header H2.

Der Empfänger der Datenpakete verwendet bei der Verarbeitung der Datenpakete mit dem kurzen Header H1 Angaben, die ihm bei Verbindungsaufbau mittels des langen Headers H2 übermittelt worden sind. Dann kann es ausreichen, wenn der kurze Header H1 nur wenige Angaben, wie beispielsweise eine Sequenznummer zur Bestimmung einer Reihenfolge der empfangenen Datenpakete, enthält. Die Länge des kurzen Headers H1 kann beispielsweise drei Byte und die Länge des langen Headers H2 40 (bei Internet Protocol Version 4) bzw. 60 (bei Internet Protocol Version 6) Byte betragen.

Gemäß Figur 3A werden die Daten D1 der ersten Verbindung V1 immer dann mit einem beliebigen der in der Funkzelle Z1 zur Verfügung stehenden Spreizcodes SC1 gespreizt und anschließend mit einem ersten der Verwürfelungscodes VC1 verwürfelt, wenn der Datenanteil DA mit dem kurzen Header H1 zu übertragen ist (Figur 4A). Für die Daten D2 der zweiten Verbindung V2 erfolgt eine Spreizung mit einem anderen der Spreizcodes SC2 und eine Verwürfelung ebenfalls mit dem ersten Verwürfelungscodes VC1, solange der kurze Header H1 aus Figur 4A zu übertragen ist, die Datenrate der Verbindung also relativ gering ist. Durch die Verwendung unterschiedlicher Spreizcodes sind die Verbindungen V1, V2 in den empfangenden Teilnehmerstationen MS1, MS2 unterscheidbar.

Gemäß Figur 4C erfolgt eine Aufteilung der Daten D1 jeder Verbindung V1 in zwei Gruppen G11, G12 immer dann, wenn der Datenanteil DA mit dem langen Header H2 zu übertragen, die Datenrate also relativ hoch ist. Im folgenden bezeichnet die erste Ziffer in der Bezeichnung der Gruppe G11, G12 die jeweilige Verbindung und die zweite Ziffer die jeweilige Gruppe dieser Verbindung. Dabei ist die Anzahl der Bits der ersten Gruppe G11 vorzugsweise gleich der Anzahl der Bits, die insgesamt im Falle des kurzen Headers zu übertragen sind (Figur 4A). Dies ermöglicht eine gleiche empfängerseitige Verarbeitung dieser Daten.

Gemäß Figur 3A werden im Falle der relativ hohen Datenrate (das heißt, es sind lange Header H2 zu übertragen) die Daten der ersten Gruppe G11 der ersten Verbindung V1 mittels des ersten Spreizcodes SC1 gespreizt und mit dem ersten Verwürfelungscode VC1 verwürfelt. Die Daten der ersten Gruppe G21 der zweiten Verbindung V2 werden im gleichen Fall mit dem zweiten Spreizcode SC2 gespreizt und mit dem ersten Verwürfelungscode VC1 verwürfelt. Die verwendeten Spreizcodes SC1, SC2 können sich von denjenigen im Fall der relativ niedrigen Datenrate unterscheiden. Sie müssen nur zum gleichen Zeitpunkt für die beiden Verbindungen V1, V2 (und zu weiteren parallelen Verbindungen, die denselben Verwürfelungscode VC1 nutzen) unterschiedlich sein, um diese voneinander unterscheiden zu können. Allerdings ist es vorteilhaft, für die erste Gruppe G11, G21 denselben Spreizcode SC1, SC2 zu verwenden wie bei der Übertragung der Datenpakete mit den kurzen Headern H1. Hierdurch wird auf einfache Weise sichergestellt, dass die denselben Verwürfelungscode VC1 nutzenden Verbindungen V1, V2 sich hinsichtlich der Spreizcodes unabhängig von der Datenrate unterscheiden.

Figur 3B zeigt, wie im Falle der relativ hohen Datenrate (das heißt, es sind lange Header H2 zu übertragen) die zweite Gruppe G12, G22 jeder Verbindung V1, V2 vor ihrer Übertragung verarbeitet werden. Die Daten der zweiten Gruppe G12 der ersten Verbindung V1 werden mit einem beliebigen der Spreizcodes SC1 gespreizt (der sich auch vom für das Spreizen der ersten Gruppe G11 derselben Verbindung V1 genutzten Spreizcode unterscheiden kann) und anschließend mit einem zweiten der Verwürfelungscodes VC2 verwürfelt. Die Daten der zweiten Gruppe G22 der zweiten Verbindung werden mit einem beliebigen anderen der Spreizcodes SC2 gespreizt und dann mit dem zweiten Verwürfelungscode VC2 verwürfelt.

Durch die Erfindung wird dafür gesorgt, dass die zu übertragenden Daten D1, D2 hauptsächlich mit dem ersten Verwürfelungscode VC1 verwürfelt werden. Dies ist immer der Fall, sofern kurze Datenpakete (Figur 4A) zu übertragen sind. Nur in den Ausnahmefällen, dass lange Datenpakete (Figur 4B) zu übertragen sind, wird zusätzlich auch der zweite Verwürfelungscode VC2 eingesetzt. Hierdurch wird erreicht, dass meistens die Orthogonalität der Spreizcodes SC1, SC2 durch die Verwendung desselben Verwürfelungscodes VC1 für die beiden Verbindung V1, V2 zum Tragen kommt. Bei Verwendung desselben Verwürfelungscodes VC1 für mehrere Verbindungen sind nämlich auch die verwürfelten Chipsequenzen orthogonal zueinander. Nur in den seltenen Fällen der langen Datenpakete führt die dann vorgesehene Verwendung des zweiten Verwürfelungscodes VC2 dazu, dass trotz der Orthogonalität der Spreizcodes SC1, SC2 die Trennung der Verbindungen V1, V2 im Empfänger nicht mehr ideal ist. Dann nämlich sind die verwürfelten Chipsequenzen nicht mehr orthogonal zueinander.

Es ist vorteilhaft, wenn die Spreizcodes und der erste und zweite Verwürfelungscode für alle Verbindungen bereits bei ihrem Aufbau fest für die Dauer der Verbindung allokiert werden. Dann ist sicher gestellt, dass die Übertragung der langen Datenpakete für jede Verbindung jederzeit erfolgen kann. Andernfalls käme es eventuell zu einem Abbruch der Verbindung. Obwohl somit für jede Verbindung V1, V2 Übertragungsressourcen, die beide Verwürfelungscodes einschließen, ständig zugeordnet sind, werden die Ressourcen des zweiten Verwürfelungscodes VC2 nur genutzt, sofern die langen Datenpakete zu übertragen sind. Während der übrigen Zeit bleiben die auf dem zweiten Verwürfelungscode VC2 reservierten Ressourcen ungenutzt. Das bedeutet, das dort keine Daten übertragen werden, so dass es zu keinen Interferenzen mit den mittels des ersten Verwürfelungscodes VC1 übertragenen Daten kommt.

Figur 5 zeigt den Aufbau der Basisstation aus Figur 1. Die Daten D1, D2 der Verbindungen V1, V2 werden einer Einheit E zugeführt, die die anhand der Figuren 3A und 3B geschilderte Spreizung und Verwürfelung vornimmt. Ein Mittel M stellt die zu verwendenden Spreizcodes SCn und Verwürfelungscodes VCm zur Verfügung. Die gespreizten und verwürfelten Daten D1, D2 werden von der Einheit E einer Übertragungseinheit TX zugeführt, die sie anschließend über die Luftschnittstelle zu den Teilnehmerstationen MS1, MS2 überträgt.

Obwohl die Erfindung vorstehend nur anhand zweier Verbindungen V1, V2 erklärt wurde, ist sie vorteilhaft auf eine größere Anzahl gleichzeitig bestehender Verbindungen anwendbar. Es ist vorteilhaft, sie auf alle Verbindungen in derselben Funkzelle Z1 anzuwenden, die eine schwankende Datenrate aufweisen. Insbesondere ist es vorteilhaft, sie auf alle Sprachverbindungen anzuwenden, deren Datenrate aufgrund der schwankenden Länge der zu übertragenden Header der Datenpakete auf die beschrieben Art schwankt. Aufgrund der beschränkten Anzahl von Spreizcodes SC1..256 in jeder Funkzelle wird dies aber nicht immer für alle gleichzeitig bestehenden Verbindungen möglich sein. In solchen Fällen sollte die Erfindung dann in der Weise umgesetzt werden, dass sie bevorzugt (das heißt, sofern aufgrund der zum jeweiligen Zeitpunkt noch nicht belegten Spreizcodes möglich) für alle Verbindungen angewendet wird.

Die Erfindung ist auch anwendbar auf Fälle, in denen die Datenrate jeder Verbindung aus anderen Gründen schwankt als die Verwendung unterschiedlich langer Header H1, H2. Sie ist insbesondere auch anwendbar für nach anderen Standards arbeitende Mobilfunksysteme, für andere Funksysteme sowie ohne Funk arbeitende Kommunikationssysteme, bei denen Verbindungen über unterschiedliche Spreizcodes und Verwürfelungscodes getrennt werden und die Datenrate der Verbindungen schwankt.

## Patentansprüche

1. Verfahren zum Übertragen von Daten (D1, D2) mehrerer Verbindungen (V1, V2) mit sich jeweils während der bestehenden Verbindung ändernden Übertragungsraten in einem Kommunikationssystem, in dem
- die Übertragungsrate jeder Verbindung (V1, V2) wenigstens einen ersten Wert und einen im Vergleich zum ersten Wert höheren zweiten Wert annehmen kann,
- für jede Verbindung (V1, V2) der erste Wert der Übertragungsrate häufiger auftritt als der zweite Wert der Übertragungsrate,
- und zueinander orthogonale Spreizcodes (SC1..256) zum Spreizen der zu übertragenden Daten (D1, D2) und wenigstens zwei Verwürfelungscodes (VC1..18) zum Verwürfeln der gespreizten Daten zur Verfügung stehen, mit folgenden Schritten:
- zum Erreichen des ersten Wertes der Übertragungsrate werden die Daten (D1, D2) der entsprechenden Verbindung (V1, V2) vor ihrer Übertragung mit einem für die Verbindung individuellen Spreizcode (SC1, SC2) gespreizt und mit dem ersten Verwürfelungscode (VC1) verwürfelt und anschließend übertragen,
- und zum Erreichen des zweiten Wertes der Übertragungsrate werden die Daten (D1) der entsprechenden Verbindung (V1) vor ihrer Übertragung in zwei Gruppen (G11, G12) aufgeteilt, woraufhin die Daten der ersten Gruppe (G11) mit einem der Spreizcodes (SC1) gespreizt und mit dem ersten Verwürfelungscode (VC1) verwürfelt werden, die Daten der zweiten Gruppe (G12) mit einem der Spreizcodes (SC1; SC3) gespreizt und mit dem zweiten Verwürfelungscode (VC2) verwürfelt werden und die Daten anschließend übertragen werden, wobei für jede der beiden Gruppen jeder Verbindung ein im Vergleich zu der entsprechenden Gruppe der anderen Verbindungen individueller Spreizcode verwendet wird.

2. Verfahren nach Anspruch 1, bei dem
für jede Verbindung (V1, V2) die zu übertragenden Daten (D1, D2) Datenpakete bilden, die einen Header (H1; H2) und einen Datenanteil (DA) aufweisen.

3. Verfahren nach Anspruch 2, bei dem für jede Verbindung (V1, V2)
- der erste Wert der Übertragungsrate vorliegt, wenn der Header (H1) des aktuell zu übertragenden Datenpakets eine erste Länge aufweist,
- und der zweite Wert der Übertragungsrate vorliegt, wenn der Header (H2) des aktuell zu übertragenden Datenpakets eine zweite Länge aufweist, die länger als die erste Länge ist.

4. Verfahren nach einem der Ansprüche 2 oder 3, bei dem
die Verbindungen Sprachverbindungen sind und der Datenanteil (DA) der Datenpakete durch codierte Sprache gebildet wird.

5. Verfahren nach einem der vorstehenden Ansprüche, bei dem bei Aufbau jeder Verbindung (V1, V2) für diese zum Erzielen sowohl des ersten als auch des zweiten Wertes der Übertragungsrate Übertragungsressourcen reserviert werden, wobei die Übertragungsressourcen durch den ersten Verwürfelungscode (VC1) und den zweiten Verwürfelungscode (VC2) jeweils in Verbindung mit den entsprechenden Spreizcodes (SC1, SC2, SC3) gebildet werden.

6. Verfahren nach einem der vorstehenden Ansprüche, bei dem
- das Kommunikationssystem ein Mobilfunksystem mit Funkzellen (Z1, Z2) ist
- und die Daten (D1, D2) der Verbindungen (V1, V2) von einer Basisstation (BS) des Mobilfunksystems in Abwärtsrichtung zu unterschiedlichen Teilnehmerstationen (MS1, MS2) übertragen werden.

7. Verfahren nach Anspruch 6, bei dem innerhalb des Mobilfunksystems
- die Spreizcodes (SC1..256) zur Unterscheidung von einzelnen Verbindungen innerhalb wenigstens einer der Funkzellen (Z1, Z2) dienen
- und die Verwürfelungscodes (VC1..18) zur Unterscheidung von Verbindungen innerhalb einer der Funkzellen (Z1) von Verbindungen innerhalb anderer der Funkzellen (Z2) dienen.

8. Verfahren nach Anspruch 7, bei dem
das Mobilfunksystem nach dem UMTS-FDD-Standard arbeitet.

9. Station (BS) für ein Kommunikationssystem zum Übertragen von Daten (D1, D2) mehrerer Verbindungen (V1, V2) mit sich jeweils während der bestehenden Verbindung ändernden Übertragungsraten,
- wobei die Übertragungsrate jeder Verbindung (V1, V2) wenigstens einen ersten Wert und einen im Vergleich zum ersten Wert höheren zweiten Wert annehmen kann,
- wobei für jede Verbindung (V1, V2) der erste Wert der Übertragungsrate häufiger auftritt als der zweite Wert der Übertragungsrate,
- mit Mitteln (M) zum Bereitstellen von zueinander orthogonalen Spreizcodes (SC1..256) zum Spreizen der zu übertragenden Daten und von wenigstens zwei Verwürfelungscodes (VC1..18) zum Verwürfeln der gespreizten Daten,
- mit einer Einheit (E) zum Spreizen und Verwürfeln, die zum Erreichen des ersten Wertes der Übertragungsrate die Daten (D1, D2) der entsprechenden Verbindung (V1, V2) vor ihrer Übertragung mit einem für die Verbindung individuellen Spreizcode (SC1, SC2) spreizt und mit dem ersten Verwürfelungscode (VC1) verwürfelt,
- dessen Einheit (E) zum Spreizen und Verwürfeln zum Erreichen des zweiten Wertes der Übertragungsrate die Daten (D1) der entsprechenden Verbindung vor ihrer Übertragung in zwei Gruppen (G11, G12) aufteilt, die Daten der ersten Gruppe (G11) mit einem der Spreizcodes (SC1) spreizt und mit dem ersten Verwürfelungscode (VC1) verwürfelt, die Daten der zweiten Gruppe (G12) mit einem der Spreizcodes (SC1; SC3) spreizt und mit dem zweiten Verwürfelungscode (VC2) verwürfelt, wobei sie für jede der beiden Gruppen jeder Verbindung ein im Vergleich zu der entsprechenden Gruppe der anderen Verbindungen individueller Spreizcode verwendet,
- und mit einer Übertragungseinheit (TX) , mit der die gespreizten und verwürfelten Daten (D1, D2) jeder Verbindung (V1, V2) übertragen werden.
